# EUROPEAN PATENT APPLICATION

(11) **EP 2 458 496 A2**
(43) Date of publication of application: **30.05.2012**
(21) Application number: 11190615.2
(22) Date of filing: 24.11.2011
(51) Int. Cl.: G06F 3/12

(54) **Document processing apparatus, method for processing document, and program therefor**

(30) Priority: 25.11.2010 JP 2010262876
(71) Applicant: Canon Kabushiki Kaisha, Tokyo 146-8501 (JP)
(72) Inventor: Kawara, Satoshi, Ohta-ku Tokyo (JP)
(74) Representative: Northway, Daniel Robert

(57) **Abstract**

A method for processing a document includes: analyzing an input document file having a first format; and setting, when it is analyzed via the analyzing the input document file that the input document file having the first format includes an attached document file having a second format, two different filters: a filter for converting the attached document file having the second format into a document file having the first format, and a filter for merging the document file having the first format converted from the second format with the document file having the first format.

## Description

### BACKGROUND OF THE INVENTION

### Field of the Invention

The present invention relates to a document processing apparatus for processing a document by using filters, a method for processing a document, and a program therefor.

### Description of the Related Art

Conventional methods for connecting a plurality of removable modules include a filter pipeline system in which modules are handled as a filter and connected by a pipeline. There are various methods for transferring data between filters, for example, a method for sequentially transferring data as streaming and a method for collectively transferring data as an electronic file. These methods for transferring data are common in that output data from a certain filter is handled as input data to the following filter.

The Microsoft XPS filter pipeline is an example of conventional filter pipeline systems. The Microsoft XPS filter pipeline can be composed of, for example, an XPS layout filter and an XPS printing filter. The XPS layout filter converts the layout of an XML paper specification (XPS) file that is input data and outputs the XPS file having the converted layout. The XPS printing filter converts a laid-out XPS file into a page description language (PDL) file which serves as a control command recognizable by a printing apparatus.

While input data to this system is an XPS file, if a portable document format (PDF) file is dealt with as input data, for example, the purpose of the system can also be achieved by building a filter pipeline system composed of a PDF layout filter and a PDF printing filter. The PDF layout filter converts the layout of a PDF file as input data and outputs a PDF file having the converted layout. The PDF printing filter converts a laid-out PDF file into a PDL file. Hereinafter, the above-mentioned system is referred to as PDF printing pipeline system.

A filter pipeline system has a principle that output data from a certain filter becomes input data to the following filter. Based on the principle, a conventional technique dynamically connects required filters according to an input file. Specifically in the above-mentioned example, when the input data is an XPS file, an XPS layout filter and an XPS printing filter are used. When the input data is a PDF file, a PDF layout filter and a PDF printing filter are used.

Specifically, conventional techniques for dynamically connecting filters will be described below.

For example, Japanese Patent Application Laid-Open No. 2002-351709 discusses a technique for solving a problem of the input data such that an output data format is determined only at the time of data conversion. Specifically, when the file format (FORMAT TYPE) of output data from a certain filter is different from an assumed file format, a filter for converting the file format to the assumed one is dynamically connected to the end of a pipeline. This technique dynamically connects a data conversion filter corresponding to input data to obtain a desired output file.

Japanese Patent Application Laid-Open No. 2005-258782 discusses a technique for dynamically determining a required filter for processing a structured document file (input data). Specifically, the technique performs the following processing. It is first checked whether the file format of document data to be subjected to the processing coincides with an input file format required by the following filter. Subsequently, when the file formats do not coincide with each other, the file format of the document data is converted into a file format required by the following filter, and then the document file is transferred to the following filter to perform the processing. When each filter requires a plurality of different data formats, filters can be dynamically configured to further improve processing efficiency.

As typical structured document files, PDF and XPS files are well-known. Data formats of these files are open in public on a uniform resource locator (URL). The above-mentioned structured document file is configured such that other document files can be embedded therein (or attached thereto). Thus, a plurality of document files with different file formats can be embedded into a document file. Such a structured document file is hereinafter referred to as combined structured document file. When the structured document file is a PDF file, it is referred to as combined PDF document file.

In the above-mentioned Microsoft XPS pipeline system and the PDF printing pipeline system, there is a case where a combined structured document file needs to be printed together with attached document files included therein. Each filter is applicable only to limited input and output files. In the above-mentioned PDF printing pipeline system, for example, a PDF layout filter handles a PDF file as input and output data. However, although the PDF layout filter can handle a PDF file as input data, it cannot necessarily handle the format of attached document files included therein. For example, in a case of a combined PDF file including an attached MS Office file therein, the PDF layout filter must be able to handle the MS Office file. Specifically, it is necessary to extract the MS Office file from the combined PDF file, convert the MS Office file into a PDF file, and merge the converted PDF file with the combined PDF file (i.e., extraction source). It is not realistic to achieve this function by using a single filter such as the PDF layout filter because internal processing of the filter becomes complicated.

On the other hand, it is possible to prepare a single filter for converting an MS Office file into a PDF file and merging a plurality of PDF files into one PDF file. Therefore, a combined PDF file can be made processable by preparing a combined filter piecing together the above-mentioned filters. However, although an MS Office file is described as an attached document file in this example, there is no limitation on file formats attachable to a combined PDF file. Therefore, it is not realistic to prepare a combined filter piecing together a plurality of the above-mentioned filters (because of a huge number of combinations).

This problem cannot be solved by using the conventional techniques. The technique discussed in Japanese Patent Application Laid-Open No. 2002-351709 recursively calls a required module by dynamically adding a module when an output file format differs from a specified file format. The technique is effective only when the data format of an output document differs from an assumed data format. Therefore, the technique is not applicable to a case where a document file includes attached document files having different file formats, such as a combined structured document file. The technique discussed in Japanese Patent Application Laid-Open No. 2005-258782 converts the entire document file into a file format processable by the following filter. Therefore, the technique is not applicable to a case where an input document file includes attached document files having different file formats, such as a combined structured document file.

Further, the techniques discussed in Japanese Patent Application Laid-Open No. 2002-351709 and No. 2005-258782 do not have means for specifying processing to be applied to a specific attached document file in a combined structured document file. Therefore, these techniques cannot configure a combined filter dynamically connecting filters required for a combined structured document file.

### SUMMARY OF THE INVENTION

The present invention in its first aspect provides a document processing apparatus as specified in claims 1 to 4.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein. The invention extends to methods, apparatus and/or use substantially as herein described with reference to the accompanying drawings. Any feature in one aspect of the invention may be applied to other aspects of the invention, in any appropriate combination. In particular, features of method aspects may be applied to apparatus aspects, and vice versa. Furthermore, features implemented in hardware may generally be implemented in software, and vice versa. Any reference to software and hardware features herein should be construed accordingly. Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Fig. 1 is a block diagram illustrating an exemplary configuration of an information processing system.

Fig. 2 conceptually illustrates processing ranging from issuing of a print order to printing.

Fig. 3 illustrates a configuration of modules of a printing system according to an exemplary embodiment.

Fig. 4 is a flow chart illustrating the entire processing according to the exemplary embodiment.

Fig. 5 illustrates exemplary filter setting files used in the exemplary embodiment.

Fig. 6 illustrates exemplary filter input/output definition files used in the exemplary embodiment.

Fig. 7 is a block diagram illustrating an exemplary processing system in a filter.

Fig. 8 schematically illustrates exemplary list files used in the exemplary embodiment.

Fig. 9 conceptually illustrates a method for transferring data between filters.

Fig. 10 is a flow chart illustrating an overview of file conversion processing performed within a printing control unit, in which belongs to the flow chart illustrated in Fig. 4.

Fig. 11 is a flow chart illustrating details of the file conversion processing performed within the printing control unit, in which belongs to the flow chart illustrated in Fig. 4.

### DESCRIPTION OF THE EMBODIMENTS

Various exemplary embodiments, features, and aspects of the invention will be described in detail below with reference to the drawings.

A first exemplary embodiment will be described below. In the present exemplary embodiment, a format conversion method according to the present invention is applied to a client personal computer (PC) in a filter pipeline system. The present exemplary embodiment will be described below based on a printing system in which a combined structured document file is converted into a PDL file subjected to printing, and the PDL file is processed by a printing apparatus and then printed on paper. However, the present invention is not limited to a printing system, but may be applicable to any systems which convert the file format of a combined document file. A method for converting the format is applicable in a similar way not only to the client PC but also to the printing apparatus. The method for converting the format is also applicable to a server providing Web services as well as to a case if offering cloud service.

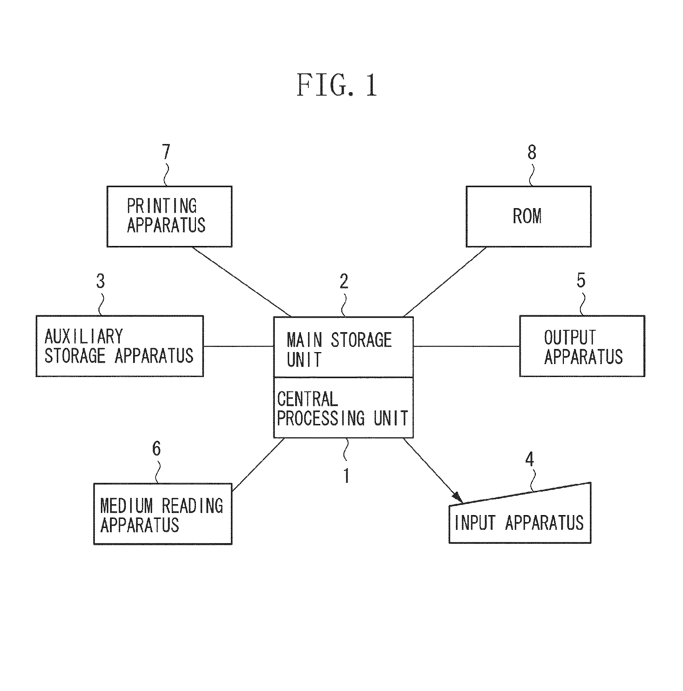

Fig. 1 is a block diagram illustrating an exemplary configuration of an information processing system to which a document processing apparatus according to the present invention is applied.

Referring to Fig. 1, a central processing unit 1 loads the above-mentioned program and related data from a storage medium such as a floppy disk (FD), a compact disc read onlymemory (CD-ROM), and an integrated circuit (IC) memory card set in a medium reading apparatus 6 connected to the information processing system. Then, by using a system program and an application program loaded from an auxiliary storage apparatus 3 to a main storage unit 2, the central processing unit 1 processes information input from an input apparatus 4 and outputs the information to an output apparatus 5 or a printing apparatus 7. In the present exemplary embodiment, the output apparatus 5 is a display apparatus which is distinguished from the printing apparatus 7. The input apparatus 4 includes a keyboard, a pointing device, etc. The auxiliary storage apparatus 3 may include a hard disk, a magneto-optical disc, or a combination of both. The present invention is feasible regardless of whether the above-mentioned apparatuses are connected via a network or not.

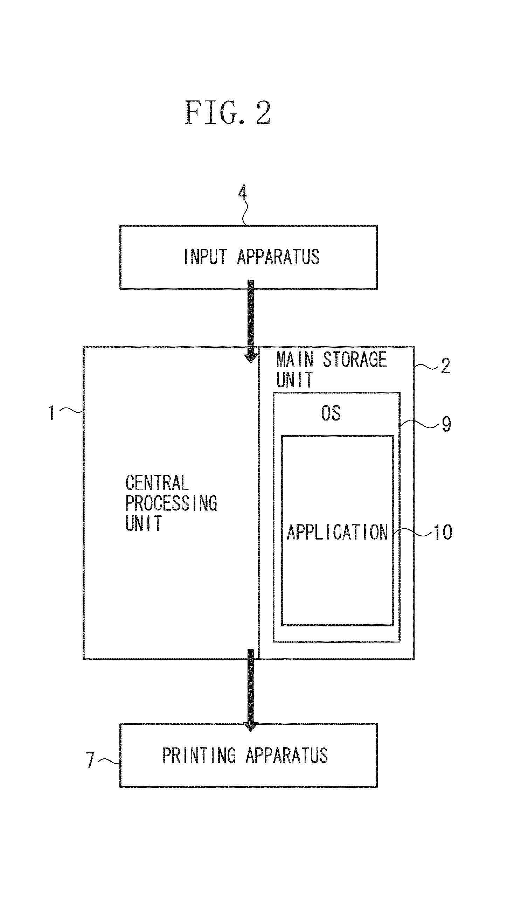

Fig. 2 conceptually illustrates processing in which a print processing control program and related data are loaded from a medium reading apparatus 6 into the central processing unit 1, a print order is input from the input apparatus 4, and data is transmitted to the printing apparatus 7 and then printed on paper. An application 10 functions under control of an operating system (OS) 9.

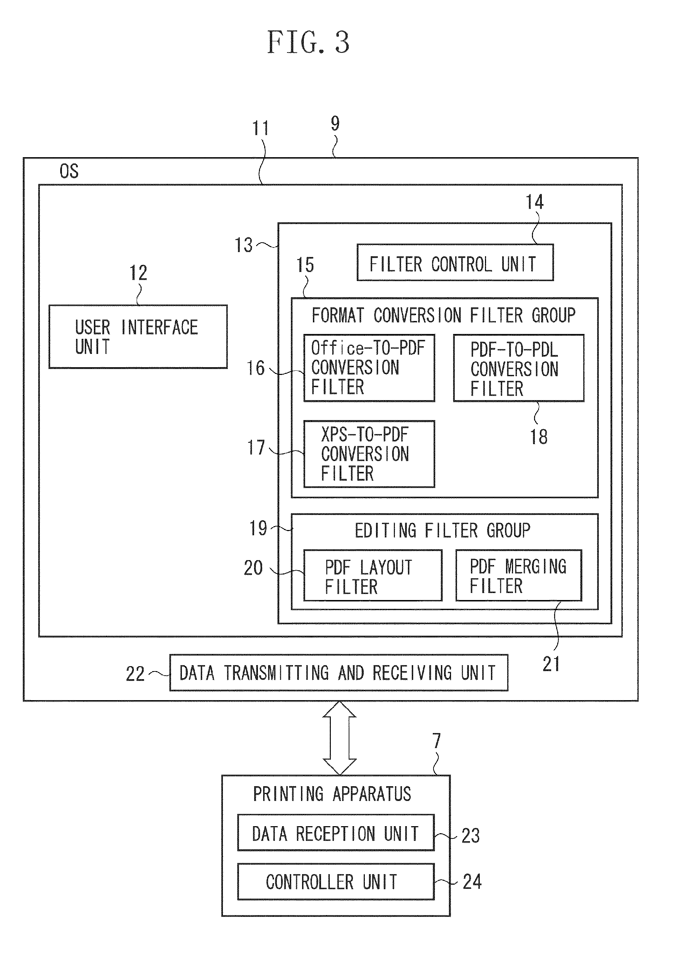

Fig. 3 illustrates most salient features of the present invention. Referring to Fig. 3, the OS 9 controls a client PC and the application 10 in a printing system (described below) according to the present invention. The OS 9 is connected with the printing apparatus 7 (described below) via the USB interface. Application software 11 on the OS 9 controls the printing apparatus 7. The application software 11 is referred to as printing application in the present exemplary embodiment.

Via a user interface unit 12, a user inputs various print settings such as settings to the printing apparatus 7 according to the present invention and instructs it to start printing.

A printing control unit 13 receives an input document file, a print setting file, and a filter setting file from the printing application 11, generates a PDL file and a print instruction file processable by the printing apparatus 7, and transmits these files to the printing apparatus 7. The printing control unit 13 includes an important processing unit on the side of a host apparatus in the printing system according to the present invention.

A filter control unit 14 controls the processing order and input and output data of various filters.

A format conversion filter group 15 is a group of format conversion filters having a file format conversion function. The format conversion filter group 15 includes an Office-to-PDF conversion filter 16, an XPS-to-PDF conversion filter 17, and a PDF-to-PDL conversion filter 18. The Office-to-PDF conversion filter 16 converts an MS Office file (Word, Excel) into a PDF file. The XPS-to-PDF conversion filter 17 converts an XPS file into a PDF file. The PDF-to-PDL conversion filter 18 generates from a PDF file and a print setting file a PDL file and a print instruction file printable by the printing apparatus 7. Although only three different conversion filters are mentioned above as examples, any conversion filters having a file format conversion function (a function of converting a file format into another one) can be added to the format conversion filter group 15.

An editing filter group 19 is a group of editing filters having a function of editing an input document file. The editing filter group 19 includes, for example, a PDF layout filter 20 and a PDF merging filter 21. The PDF layout filter 20 converts an input PDF file into a PDF file suitable for N-up (laying out N pages on one sheet), bookbinding, poster printing, etc. The PDF merging filter 21 merges a plurality of input PDF files into one PDF file.

The Office-to-PDF conversion filter 16, the XPS-to-PDF conversion filter 17, the PDF-to-PDL conversion filter 18, the PDF layout filter 20, and the PDF merging filter 21 have respective input and output file specifications. The printing control unit 13 serves as a filter pipeline system that connects these filters.

A data transmitting and receiving unit 22, a function of the OS 9, transmits and receives data to/from the printing apparatus 7 via the Centronics interface. The printing control unit 13 transmits generated PDL data and a print instruction document to the printing apparatus 7 via the data transmitting and receiving unit 22.

The printing apparatus 7 performs print processing according to the PDL file and the print instruction document received from the connected host apparatus.

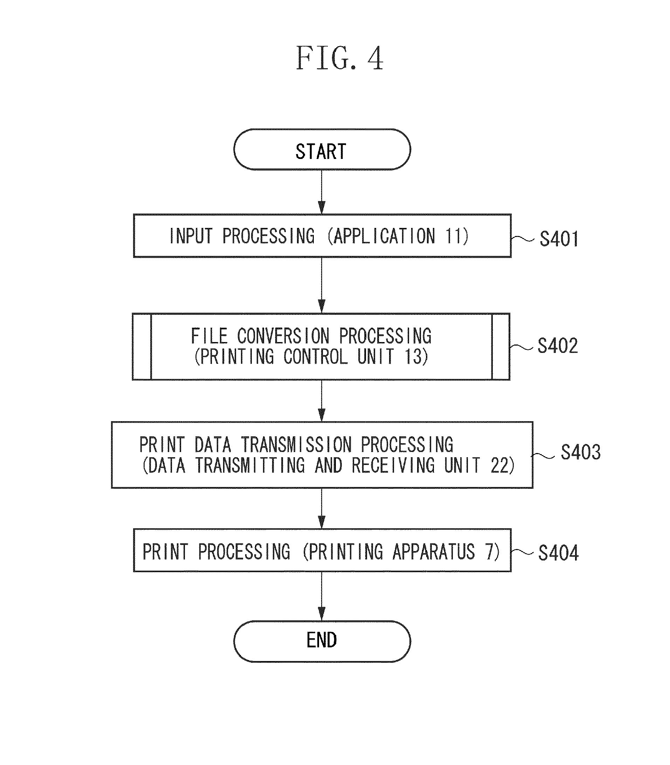

The entire processing flow according to the present exemplary embodiment will be described below with reference to the flow chart in Fig. 4.

The printing application 11 identifies an input document file, a print setting file, and a filter setting file from the input apparatus 4 via the user interface unit 12. The input document file is subjected to printing. The print setting file describes a printing method such as N-up printing. The filter setting file specifies filters required for processing by the printing control unit 13. In step S401, the printing application 11 transmits these files and a print start instruction to the printing control unit 13 to start printing.

In step S402, the printing control unit 13 transmits the input document file and the print setting file to the filter control unit 14. The filter control unit 14 loads filters required for processing based on the filter setting file, performs processing based on the filter setting file, and transmits PDL data (output file) and a print instruction document to the data transmitting and receiving unit 22. Processing in the printing control unit 13 will be described in detail below.

In step S403, upon reception of an instruction from the printing control unit 13, the data transmitting and receiving unit 22 transmits the PDL file (output file) and the print instruction document to the printing apparatus 7. In step S404, the printing apparatus 7 prints the received PDL file.

Prior to detailed description of the processing in the printing control unit 13 (step S402), some elements will be described below.

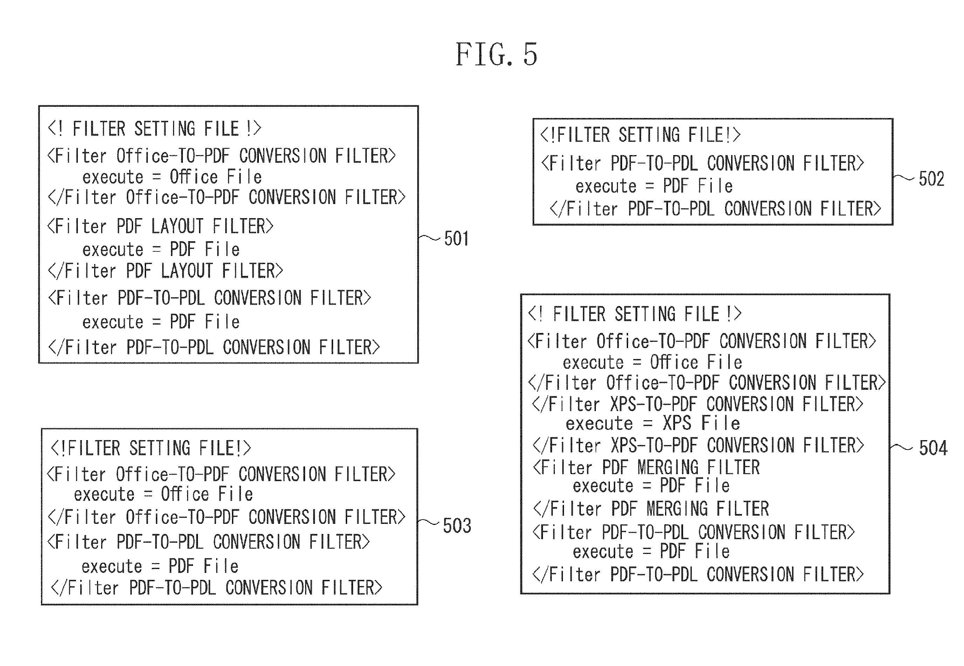

Fig. 5 illustrates exemplary filter setting files. A filter setting file 501 describes a filter setting according to which the Office-to-PDF conversion filter 16 processes an MS Office file, the PDF layout filter 20 processes a PDF file, and the PDF-to-PDL conversion filter 18 processes a PDF file. Upon reception of an instruction from the printing control unit 13, the filter control unit 14 performs respective filter processing in order of description in the filter setting file 501 to obtain final output data. A filter setting file 502 describes a filter setting according to which only the PDF-to-PDL conversion filter 18 converts a PDF file into a PDL file.

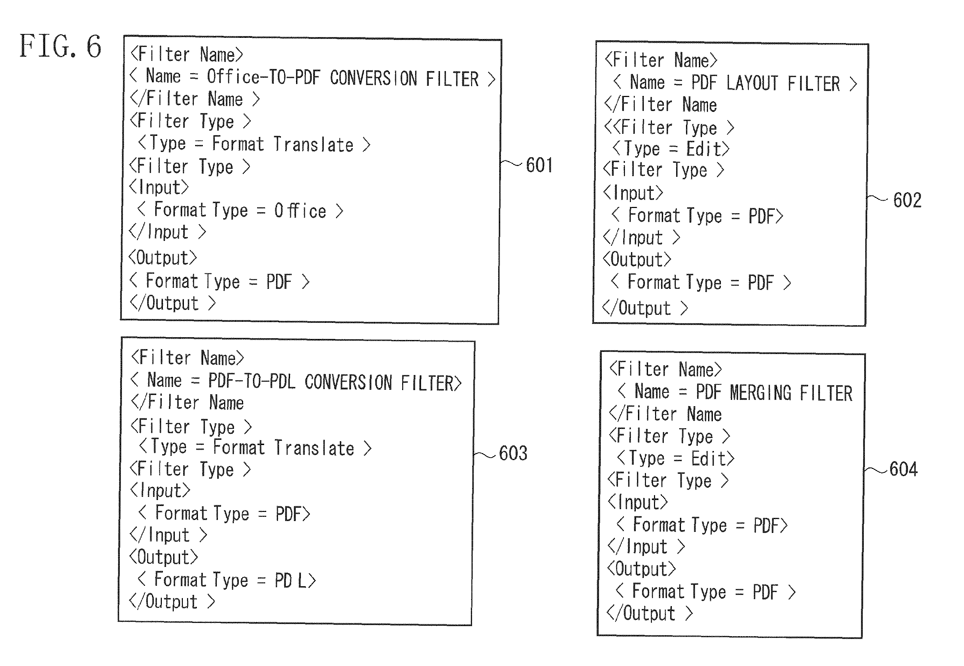

Filter input/output definition files will be described below. Because they are operated on the filter pipeline system, the Office-to-PDF conversion filter 16, the XPS-to-PDF conversion filter 17, the PDF-to-PDL conversion filter 18, the PDF layout filter 20, and the PDF merging filter 21 each need input and output data specifications. Therefore, it is necessary to prepare a filter input/output definition file for specifying input and output data for each filter. By referring to the filter input/output definition file, the filter control unit 14 can validate filter setting files such as filter setting files 501 and 502. Further, by updating filter setting files such as filter setting files 501 and 502 based on this information, filters can be dynamically connected (details will be described below). Fig. 6 illustrates exemplary filter input/output definition files. A filter input/output definition file 601 specifies a filter name of Office-PDF conversion filter, a filter type of format conversion, an input file format of MS Office file, and an output file format of PDF file. Filter input/output definition files 602, 603, and 604 specify the PDF layout filter 20, the PDF-to-PDL conversion filter 18, and the PDF merging filter 21, respectively.

Processing in the Office-to-PDF conversion filter 16, the XPS-to-PDF conversion filter 17, the PDF-to-PDL conversion filter 18, the PDF layout filter 20, and the PDF merging filter 21, and how the filter control unit 14 operating in the printing control unit 13 controls these filters will be described below.

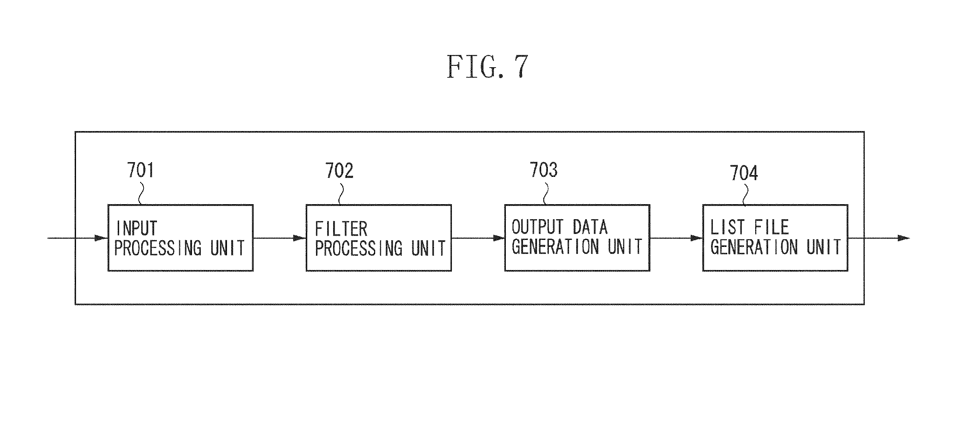

Processing in the Office-to-PDF conversion filter 16, the XPS-to-PDF conversion filter 17, the PDF-to-PDL conversion filter 18, the PDF layout filter 20, and the PDF merging filter 21 will be described below with reference to Fig. 7. Fig. 7 is a block diagram illustrating a processing system in each individual filter according to the present exemplary embodiment. An input processing unit 701 receives output data from a preceding filter as input data. A filter processing unit 702 performs respective filter processing, for example, the Office-to-PDF conversion filter 16 converts an MS Office file into a PDF file, and the PDF layout filter 20 edits the layout of a PDF file. An output data generation unit 703 generates output data reflecting results of the processing by the filter processing unit 702. When data is generated successively, in this case, the output data generation unit 703 sequentially sends the data as a stream. When outputting an entity file in memory or a hard disk, it is possible that the list file generation unit 704 generates a list file listing link information to the entity file and then sends the list file as a stream.

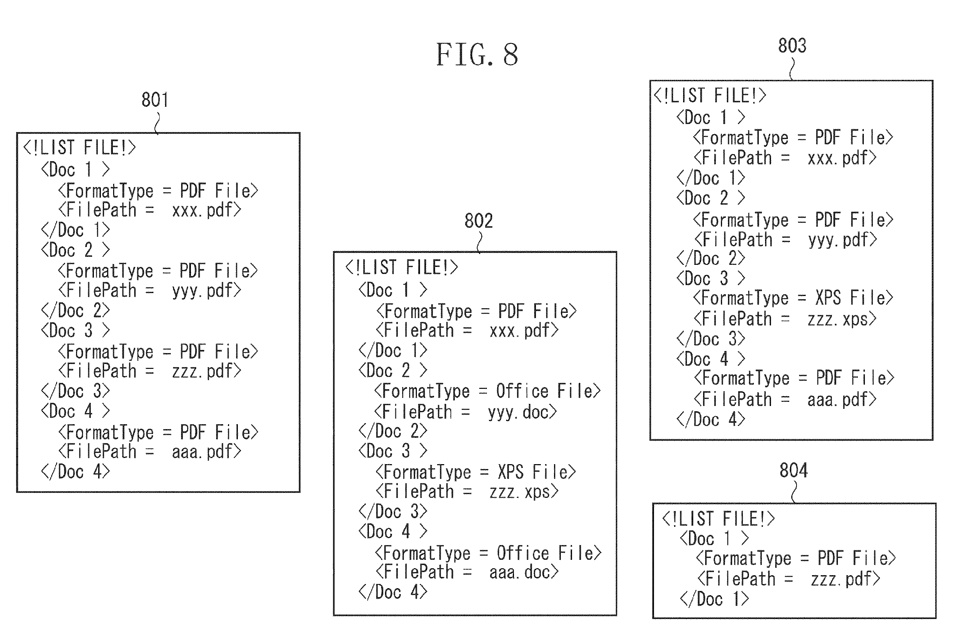

Fig. 8 schematically illustrates exemplary list files. Referring to Fig. 8, a list file 801 describes four linked files (Doc1 to Doc4) and their file formats (Format Type) and file paths (File Path). When a list file is input data to a certain filter, the filter processes all of document files in the list file with which the file format (Format Type) coincides with the input file format (Input / Format Type) specified in a filter input/output definition file.

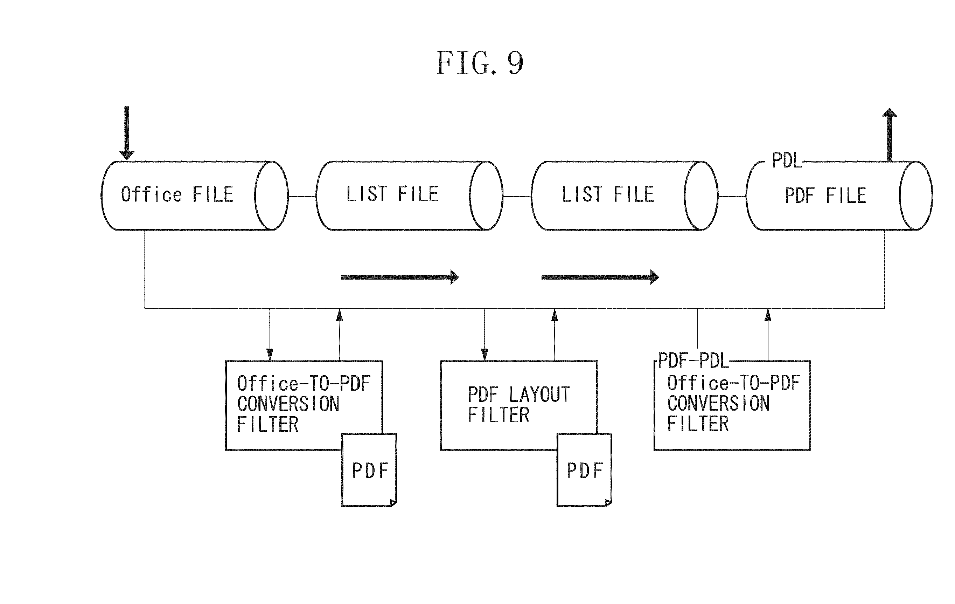

A method for transferring data between filters will be described below. Fig. 9 conceptually illustrates a method for transferring data between filters. Referring to Fig. 9, an MS Office file is input data to the filter control unit 14; the Office-to-PDF conversion filter 16, the PDF layout filter 20, and the PDF-to-PDL conversion filter 18 process the data; and the PDF-to-PDL conversion filter 18 outputs a PDL file as final data.

When the filter control unit 14 transfers the MS Office file (input data) to the first filter, i.e., the Office-to-PDF conversion filter 16 as a stream. The Office-to-PDF conversion filter 16 converts the MS Office file into a PDF file, generates a list file specifying a file path to the generated PDF file, and transfers the list file to the filter control unit 14 as a stream. For example, suppose that the PDF layout filter 20 stores an entity PDF file in the auxiliary storage apparatus 3 (a hard disk etc.), it is not efficient to send the PDF file as a stream again. Instead, efficient data transfer is achieved by transferring only the list file for the stored PDF file to the following filter. The filter control unit 14 determines whether the data to be sent as a stream is a list file, and each filter performs processing according to an instruction from the filter control unit 14.

The filter control unit 14 feeds output data from a preceding filter as input data to the following filter. Therefore, a list file is transferred as input data to the following PDF layout filter 20 as a stream. The PDF layout filter 20 arranges the layout of the PDF file specified in the received list file according to the print setting separately received from the filter control unit 14, and then outputs the arranged PDF file. The PDF layout filter 20 generates a list file similar to the Office-PDF conversion filter 16, and then transfers the list file to the filter control unit 14 as a stream. The filter control unit 14 transfers the list file to the following PDF-to-PDL conversion filter 18 as input data. The PDF-to-PDL conversion filter 18 converts the PDF file into a PDL file and then transfers the PDL file to the filter control unit 14 as a stream. The filter control unit 14 outputs the PDL file as output data of the format conversion filter group 15.

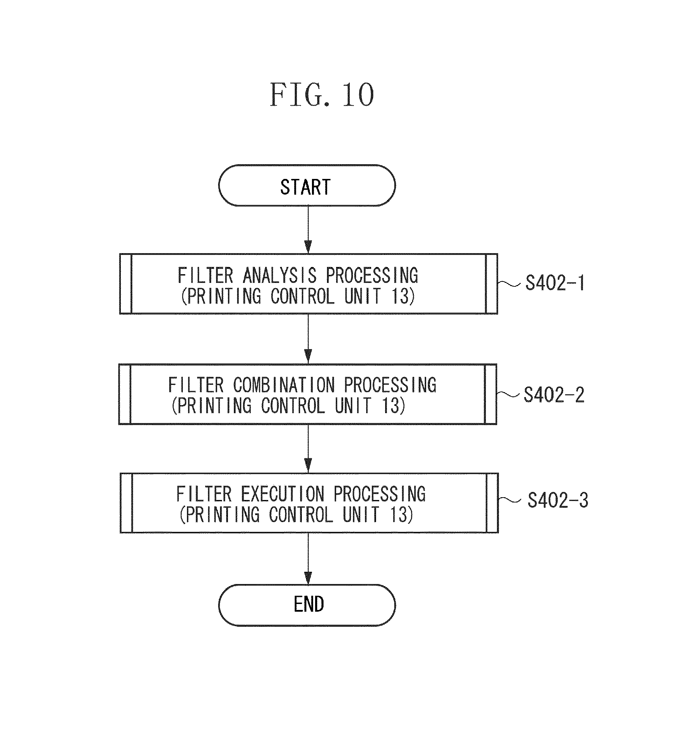

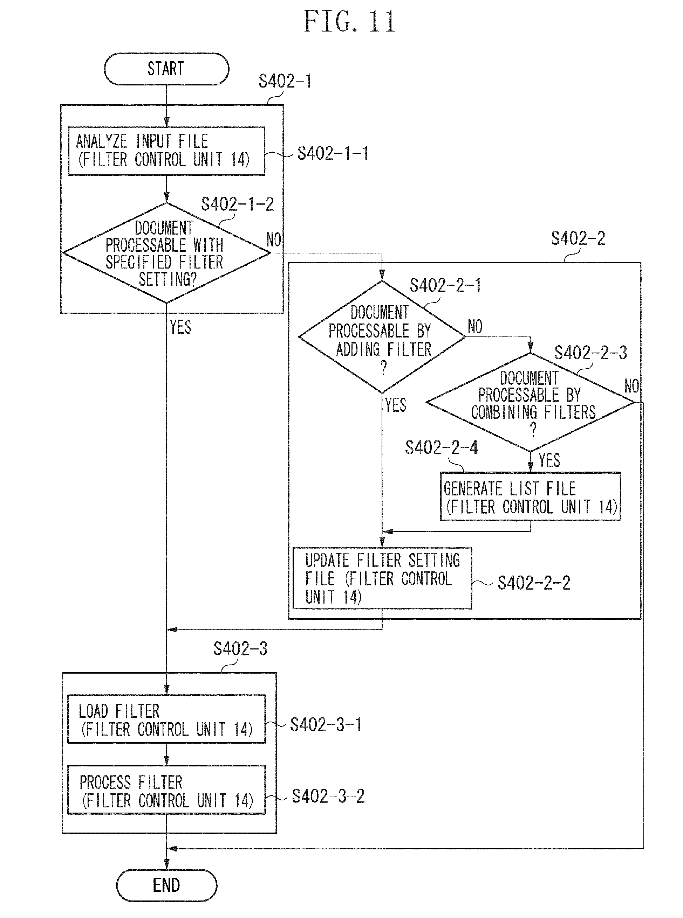

The processing by the printing control unit 13 (step S402) will be described in detail below with reference to the flow charts in Figs. 10 and 11. Fig. 10 is a flow chart illustrating an overview of the processing in step S402. Fig. 11 is a flow chart illustrating details of the processing in step S402.

The overview of the processing in step S402 will be described below. In step S402-1, the printing control unit 13 performs file analysis processing. Specifically, the printing control unit 13 instructs the filter control unit 14 to analyze an input document subjected to printing; acquires the file format and, if the input document is a structured document file, information about whether it includes any attached document files; and determines whether the input document is processable by a specified filter.

In step S402-2, the printing control unit 13 performs filter combination processing. Specifically, the printing control unit 13 determines whether the input document can be made processable by adding or combining filters; and, if it can be made processable, dynamically connects these filters.

In step S402-3, the printing control unit 13 performs filter execution processing. Specifically, the printing control unit 13 actually loads filters dynamically combined by the filter combination processing in step S402-2.

The above-mentioned processing in steps S402-1, S402-2, and S402-3 corresponds to steps S402-1-1 to S402-1-2, S402-2-1 to S402-2-4, and S402-3-1 to S402-3-2, respectively, in Fig. 11. Details of the processing in step S402 will be described below with reference to Fig. 11.

The printing control unit 13 instructs the filter control unit 14 to analyze the input document file subjected to printing to determine whether the input document is processable based on the received filter setting file. In steps S402-1-1 and S402-1-2, the filter control unit 14 performs file analysis processing according to the instruction. The above-mentioned "analyzing the input document file" includes: determining the file format based on the file name extension of the input document subjected to printing; determining whether the input document is a structured document file and, if the input document is a structured document file, determining whether it includes any attached document files; and acquiring, if it includes any attached document files, information about the file format of the attached document file. The processing will be described in more detail below based on exemplary files. First of all, the processing will be described below based on the filter setting file 502 (Fig. 5) which describes only the PDF-to-PDL conversion filter 18. When the input data is a PDF file based on the filter input/output definition file 603 for the PDF-to-PDL conversion filter 18, the input data is determined to be processable (Case 1). When the input data is an MS Office file, which is not supported by the PDF-to-PDL conversion filter 18, the input data is determined to be unprocessable (Case 2). When the input data is a combined PDF file, since attached document files in this PDF file cannot be processed by the PDF-to-PDL conversion filter 18, the input document is determined to be unprocessable (Case 3).

When the filter control unit 14 determines that the input document is processable (YES in step S402-1-2), for example in Case 1, the processing proceeds to step S402-3-1. In step S402-3-1, the filter control unit 14 sequentially loads filters described in the filter setting file 502. In Case 1, the filter control unit 14 loads only the PDF-to-PDL conversion filter 18. Processing in cases 2 and 3 will be described below.

In step S402-3-2, the filter control unit 14 controls the loaded filters as described in paragraphs 0052 and 0053 to obtain a final output file.

Otherwise, when the filter control unit 14 determines that the input document is unprocessable (NO in step S402-1-2), the processing proceeds to step S402-2-1. In step S402-2-1, the filter control unit 14 determines whether the input document can be made processable by adding a new filter not described in the filter setting file 502. In step S402-2-1, the filter control unit 14 makes the determination by using the filter input/output definition files 601 to 604, an actually input document file (an MS Office file in Case 2, or a combined PDF file in Case 3), and the filter definition file 502.

Processing in Case 2 will be described below. Since the filter setting file 502 describes the PDF-to-PDL conversion filter 18 as the first filter, it is found based on the filter input/output file 603 that the input data must be a PDF file. Specifically, when the input data is an MS Office file, the input document can be made processable by adding the Office-to-PDF conversion filter 16 (for converting an MS Office file into a PDF file) to the top of the filter pipeline. Therefore, the filter control unit 14 determines that the input document can be made processable by adding the relevant filter.

When the filter control unit 14 determines that the input document is processable (YES in step S402-2-1), the processing proceeds to step S402-2-2. In step S402-2-2, the filter control unit 14 updates the filter setting file 502. In Case 2, the filter control unit 14 updates the filter setting file 502 so that the Office-to-PDF conversion filter 16 (for converting an MS Office file into a PDF file) is added to the top of the filter pipeline. Specifically, the filter control unit 14 updates the filter setting file 502 into the filter setting file 503.

Otherwise, when the filter control unit 14 determines that the input document is unprocessable (NO in step S402-2-1), the processing proceeds to step S402-2-3. In step S402-2-3, the filter control unit 14 determines whether the input document can be made processable by combining a plurality of filters. The filter control unit 14 makes the determination based also on a result of the input data analysis processing (step S402-1-1). Specifically, the filter control unit 14 determines the file format of the input document subjected to printing. The filter control unit 14 determines whether the input document is a structured document file based on its file format and, if the input document is a structured document file, determines whether it includes any attached document files. If the input document includes any attached document files, the filter control unit 14 uses information about the file format of the attached document file. In Case 3, two MS-Office files and one XPS file are attached to a combined PDF file in order of an MS-Office file, an XPS file, and an MS-Office file.

In this case, as a result of the input data analysis processing (step S402-1-1), the following information is acquired: "the input document is a structured document which includes three attached document files: an MS-Office file, an XPS file, and an MS-Office file."

Similar to Case 2, the filter setting file 502 describes the PDF-to-PDL conversion filter 18 as the first filter in Case 3. The PDF-to-PDL conversion filter 18 cannot process attached document files included in a combined PDF file. However, after the filter control unit 14 performs the following procedures, the PDF-to-PDL conversion filter 18 can process attached document files included in a combined PDF file. The filter control unit 14 extracts the attached two MS Office files and XPS file as files independent of the combined PDF file, converts the combined PDF file into a simple PDF file, and stores these files in the auxiliary storage apparatus 3. Then, the filter control unit 14 generates a list file 802 which describes file paths to these files. A PDF file described at the top of the list file 802 refers to the simple PDF file converted from the combined PDF file. The following MS Office file, XPS file, and MS Office file refer to the files extracted from the combined PDF file. Then, the generated list file 802 can be made processable if a pipeline is configured by combining the Office-to-PDF conversion filter 16, the XPS-to-PDF conversion filter 17, and the PDF merging filter 21. In this case, therefore, the filter control unit 14 determines that the input document can be made processable by combining filters.

When the filter control unit 14 determines that the input document can be made processable by combining a plurality of filters (YES in step S402-2-3), the processing proceeds to step S402-2-4. In step S402-2-4, the filter control unit 14 generates an above-mentioned list file. In Case 3, the filter control unit 14 divides the original PDF file into a PDF file and extracted MS-Office files and XPS file. Since it is difficult to simultaneously send these files to a filter because of the characteristics of the filter pipeline system, the filter control unit 14 generates a list file. In Case 3, specifically, the filter control unit 14 generates the list file 802.

As described above, in a case of the list file 802 two MS-Office files and an XPS file are attached to a combined PDF file, in order of an MS-Office file, an XPS file, and an MS-Office file.

When the filter control unit 14 determines that the input document can be made processable by combining a plurality of filters (YES in step S402-2-3), similar to a case where it determines that the input document is processable (YES in step S402-2-1), the processing proceeds to step S402-2-2. In step S402-2-2, the filter control unit 14 updates the filter setting file 502 to reflect the result of step S402-2-3. In Case 3, to process the generated list file 802, the filter control unit 14 adds the Office-to-PDF conversion filter 16 (for converting an MS Office file into a PDF file) to the top of the filter pipeline, and updates the filter setting file 502 into a filter setting file 504 so that the XPS-to-PDF conversion filter 17 (for converting an XPS file into a PDF) and the PDF merging filter 21 (for combining DF files) are processed.

When the filter control unit 14 determines that the input document is unprocessable (NO in step S402-2-3), the filter control unit 14 recognizes the input document as unprocessable data and terminates processing. For example, when the input data is an XPS file and there is no filter for converting an XPS file into a PDF file, the filter control unit 14 recognizes the input document as unprocessable data and terminates processing. Also when the input data is a combined PDF file and there is no filter for converting attached data in the combined PDF into a PDF file, the filter control unit 14 recognizes the input document as unprocessable data and terminates processing.

Even when the processing proceeds to steps S402-2-1 and S402-2-3, the processing performs steps S402-3-1 and S402-3-2. Since processing in step S402-3-1 has already been described above, duplicated explanations will be omitted. Although processing in step S402-3-2 has already been described above, a case where a list file is generated in step S402-2-4 will be described below. As described in paragraph 0051, when a list file is input data to each filter, the filter processes all of document files in the list file with which the file format coincides with the input file format specified in a filter input/output definition file. Case 3 will be described below. In Case 3, the filter setting file 504 and the list file 802 (input data) are used. The filter setting file 504 describes that MS Office files out of the files described in the list file 802 are processed by the Office-to-PDF conversion filter 16 (first filter). Specifically, "execute = OfficeFile" is described. Therefore, of the files described in the list files 802, files having the Office file format (FormatType = Office File) are processed. In this case, "yyy.doc" and "aaa.doc" are converted into a PDF file by the Office-to-PDF conversion filter 16, and the list file 802 is updated into a list file 803.

Then, the filter setting file 504 describes that XPS files out of the files described in the list file 803 are processed by the XPS-to-PDF conversion filter 17. Specifically, "execute = XPS file" is described. Therefore, of the files described in the list files 802, files having the XPS file format (FormatType = XPS File) are processed. In this case, "zzz.xps" is converted into a PDF file by the XPS-to-PDF conversion filter 17, and the list file 803 is updated to the list file 801.

In this way, processing files having a file format specified in a filter setting file, out of the files described in a list file, achieves totally efficient processing. In the above example, a list file includes Office files not in a successive way, i.e., a PDF file, an Office file, an XPS file, and an Office file. However, the Office-to-PDF conversion filter 16 needs to be loaded and executed only once.

Then, input data to the following PDF merging filter 21 is the list file 801. The filter setting file 504 describes that PDF files out of the file described in the list file 801 are processed by the PDF merging filter 21. Specifically, "execute = PDF File" is described. Therefore, of the files described in the list files 801, files having the PDF file format (FormatType= PDF File) are processed. In this case, "xxx.pdf", "yyy.pdf", "zzz.pdf", and "aaa.pdf" are merged into one PDF file by the PDF merging filter 21, and the list file 801 is updated into the list file 804. Finally, a PDF file described in the list file 804 is processed by the PDF-to-PDL conversion filter 18, and a final PDL file is obtained as an output result. Then, the filter control unit 14 considers the PDL file as output data of the format conversion filter group 15.

Generating a list file for a combined PDF file (a combined structured document file) in this way enables specifying processing to be applied to a specific attached document file (for example, an MS Office file) included in the combined PDF file. This approach makes it possible to dynamically configure a filter pipeline even when the input data is a combined PDF file (a combined structured document file). Further, this approach easily achieves connection of a new filter to the filter pipeline since processing module information is generated and updated based on a definition file specifying the input and output file formats for each filter.

In the above-mentioned exemplary embodiment of the present invention, generating a list file for a structured document file enables specifying processing to be applied to a specific attached document file included therein. The exemplary embodiment makes it possible to dynamically configure a filter pipeline even when the input data is a combined structured document file. Further, the exemplary embodiment easily achieves connection of a new filter to the filter pipeline since processing module information is generated and updated based on a definition file specifying the input and output file formats for each filter.

### Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

There has been proposed herein a document processing apparatus comprising: an analysis means configured to analyze an input document file; a generation means (703, 704) configured to, via the analysis means, divide the input document file into a plurality of document files, and generate a list file indicating a link to each of the divided document files; and a setting means configured to set a filter for processing the divided document files. Also there has been proposed a method for processing a document, comprising the steps of: analyzing an input document file; via the step of analyzing the input document file, dividing the input document file into a plurality of document files, and generating a list file indicating a link to each of the divided document files; and setting filters for respectively processing the divided document files

While the present invention has been described with reference to exemplary embodiments, it is to be understood that the invention is not limited to the disclosed exemplary embodiments. Each feature disclosed in the description, and (where appropriate) the claims and drawings may be provided independently or in any appropriate combination.

## Claims

1. A document processing apparatus comprising:
an analysis means configured to analyze an input document file having a first format; and
a setting means configured to, when the analysis means determines that the input document file having the first format includes an attached document file having a second format, set: a filter for converting the attached document file having the second format into a document file having the first format, and a filter for merging the document file having the first format converted from the second format with the document file having the first format.

2. The document processing apparatus according to claim 1, further comprising:
a generation means (703, 704) configured to, when the analysis means determines that the input document file having the first format includes an attached document file having a second format, divide the input document file into document files respectively having the first and second formats, and generate a list file indicating a link to each of the divided document files.

3. The document processing apparatus according to claim 1, wherein, when the analysis means determines that the input document file having the first format includes attached document files respectively having second and third formats, the setting means sets: a filter for converting the attached document file having the second format into a document file having the first format, a filter for converting the attached document file having the third format into a document file having the first format, and a filter for merging together the document file having the first format converted from the second format, the document file having the first format converted from the third format, and the document file having the first format.

4. The document processing apparatus according to claim 3 as dependent upon claim 2, wherein, when the document file having the third format is listed between document files having the second format in the list file, the filter for converting the attached document file having the second format into a document file having the first format successively converts the document files having the second format into document files having the first format.

5. A method for processing a document, comprising the steps of:
analyzing an input document file having a first format; and
setting, when the step of analyzing an input document file determines that the input document file having the first format includes an attached document file having a second format, a filter for converting the attached document file having the second format into a document file having the first format, and a filter for merging the document file having the first format converted from the second format with the document file having the first format.

6. The method for processing a document according to claim 5, further comprising:
a generation means (703, 704) configured to, when the analysis means determines that the input document file having the first format includes an attached document file having a second format, divide the input document file into document files respectively having the first and second formats, and generate a list file indicating a link to each of the divided document files.

7. The method for processing a document according to claim 5, wherein, when the analysis means determines that the input document file having the first format includes attached document files respectively having second and third formats, the step of setting filters sets: a filter for converting the attached document file having the second format into a document file having the first format, a filter for converting the attached document file having the third format into a document file having the first format, and a filter for merging together the document file having the first format converted from the second format, the document file having the first format converted from the third format, and the document file having the first format.

8. The method for processing a document according to claim 7 as dependent upon claim 6, wherein, when the document file having the third format is listed between document files having the second format in the list file, the filter for converting the attached document file having the second format into a document file having the first format successively converts the document files having the second format into document files having the first format.

9. A program for causing a computer to execute the document processing method according to claim 5.
